# FASCICULE DE BREVET EUROPEEN

(11) **EP 3 969 793 B1**
(45) Date de publication et mention de la délivrance du brevet: **19.04.2023**
(21) Numéro de dépôt: 20723125.9
(22) Date de dépôt: 04.05.2020
(51) Int. Cl.: F16K 3/312, F16K 35/14

(54) **DISPOSITIF D'OBTURATION D'UNE CANALISATION**
VORRICHTUNG ZUM ABSPERREN EINER ROHRLEITUNG
DEVICE FOR SHUTTING OFF A PIPE

(30) Priorité: 17.05.2019 FR 1905200
(43) Date de publication de la demande: 23.03.2022
(73) Titulaire: ONIS, 13410 Lambesc (FR)
(72) Inventeur: FUMANAL, Yann, 13330 PELISSANNE (FR); FLUMIANI, Adrien, 13111 COUDOUX (FR)
(74) Mandataire: GPI Brevets
(86) Numéro de dépôt international: PCT/EP2020/062333
(87) Numéro de publication internationale: WO 2020/233973

(56) Documents cités:
- EP-A1- 3 144 569
- GB-A- 772 207

## Description

La présente invention a pour objet un dispositif d'obturation destiné à être rapporté sur une canalisation pour permettre de réaliser une obturation étanche ou une circulation fluidique d'un fluide.

L'invention se rapporte au domaine technique général des vannes associées en amont et en aval à un obturateur en ligne sur une canalisation. Un tel obturateur en ligne se distingue des vannes classiques en ce qu'il comporte une plaque mobile dans un plan perpendiculaire par rapport à la canalisation et des moyens de serrage (et d'écartement) permettant de serrer (ou de libérer) la plaque mobile dans une position d'obturation et alternativement dans une position de circulation du fluide. GB772207A montre un dispositif d'obturation d'une canalisation avec un système d'inter-verrouillage.

L'invention trouve son application tout particulièrement dans les installations chimiques ou pétrochimiques dans lesquelles une étanchéité totale est requise lors de l'obturation d'une canalisation. De plus, les dispositifs d'obturation connus peuvent comporter une plaque d'inter-verrouillage pour inter-verrouiller un organe de commande de serrage permettant de commander les moyens de serrage de l'obturateur en ligne avec, d'une part, un organe de commande amont d'une vanne amont et, d'autre part, un organe de commande aval d'une vanne aval.

Cependant, une telle plaque d'inter-verrouillage est complexe à fabriquer. En effet, des portions de la plaque d'inter-verrouillage doivent être aptes à coopérer précisément avec les différents organes de commande du dispositif d'obturation.

En outre, chaque plaque d'inter-verrouillage est dédiée à une combinaison unique d'une vanne amont, d'une vanne aval et d'un obturateur en ligne. Par conséquent, en cas de panne de l'un de ces éléments, la plaque d'inter-verrouillage oblige à remplacer l'organe défectueux par exactement le même organe produit par un même fournisseur.

La présente invention a alors pour objet de proposer un dispositif d'obturation plus simple à fabriquer et qui soit modulable pour faciliter le remplacement d'un organe défectueux, et notamment une vanne amont ou aval, du dispositif d'obturation.

L'invention concerne donc un dispositif d'obturation d'une canalisation permettant une circulation fluidique d'au moins un fluide, le dispositif d'obturation comportant :
- un obturateur en ligne permettant de réaliser une obturation étanche, et inversement, une ouverture de la canalisation, l'obturateur en ligne comportant une plaque et des moyens de serrage permettant de serrer, et inversement, de libérer la plaque pour permettre un déplacement relatif de la plaque par rapport à la canalisation, la plaque pouvant être déplacée sous la dépendance du positionnement d'un organe de commande de serrage,
- une vanne amont agencée en amont de l'obturateur en ligne, la vanne amont pouvant être actionnée entre une position ouverte autorisant la circulation fluidique et une position fermée empêchant la circulation fluidique, la vanne amont étant actionnée manuellement par un opérateur au moyen d'un organe de commande amont,
- une vanne aval agencée en aval de l'obturateur en ligne, la vanne aval pouvant être actionnée entre une position ouverte autorisant la circulation fluidique et une position fermée empêchant la circulation fluidique, la vanne aval étant actionnée manuellement par un opérateur au moyen d'un organe de commande aval.

Selon l'invention, un tel dispositif d'obturation est remarquable en ce qu'il comporte un système d'inter-verrouillage pour inter-verrouiller l'organe de commande de serrage avec l'organe de commande amont et l'organe de commande aval, le système d'inter-verrouillage étant mobile en translation selon une direction OX entre une première position extrémale et une seconde position extrémale, le système d'inter-verrouillage comportant différentes portions telles que :
∘ dans la première position extrémale, une première portion permet l'actionnement manuel de l'organe de commande amont, une deuxième portion permet l'actionnement manuel de l'organe de commande aval et une troisième portion interdit l'actionnement manuel de l'organe de commande de serrage,
∘ dans la seconde position extrémale, une quatrième portion interdit l'actionnement manuel de l'organe de commande amont, une cinquième portion interdit l'actionnement manuel de l'organe de commande aval et une sixième portion permet l'actionnement manuel de l'organe de commande de serrage.

De plus, un tel système d'inter-verrouillage comporte au moins trois pièces distinctes assemblées entre elles, les au moins trois pièces comprenant une première pièce comportant la première portion et la quatrième portion, une deuxième pièce comportant la troisième portion et la sixième portion et une troisième pièce comportant la deuxième portion et la cinquième portion.

Autrement dit, un tel assemblage en trois pièces du système d'inter-verrouillage permet de supprimer des contraintes dimensionnelles liées à la fabrication du système d'interverrouillage. De plus, chacune des première, deuxième et troisième pièces peut présenter différentes dimensions afin par exemple de s'adapter à plusieurs modèles différents de vannes amont, de vannes aval ou d'obturateurs en ligne.

Par ailleurs, les trois pièces constituant le système d'interverrouillage peuvent être indifféremment assemblées entre elles. Selon un premier exemple de réalisation, la première pièce et la troisième pièce peuvent être rapportées sur une deuxième pièce présentant une longueur supérieure aux deux autres pièces.

Selon un deuxième exemple de réalisation, la première pièce et la deuxième pièce peuvent également être rapportées sur une troisième pièce présentant une longueur supérieure aux deux autres pièces.

Selon un troisième exemple de réalisation, la première pièce peut être rapportée sur la deuxième pièce, la deuxième pièce étant quant à elle rapportée sur la troisième pièce. Dans ce cas, les trois pièces peuvent alors présenter des longueurs sensiblement équivalentes les unes par rapport aux autres.

Ainsi, lorsqu'une vanne amont, une vanne aval ou un obturateur en ligne est à remplacer, seule une pièce correspondante du système d'inter-verrouillage peut être remplacée ou déplacée par rapport aux autres pièces du système d'inter-verrouillage.

En outre, les vannes amont et aval d'un tel dispositif d'obturation peuvent être choisies parmi le groupe comportant les vannes à boisseau sphérique, les vannes papillons, les vannes à membrane, les vannes guillotine, les vannes à clapet et les vannes à piston. Lorsque l'une de ces vannes amont ou aval est défectueuse, cette vanne défectueuse peut alors être remplacée par un autre modèle de vanne ou par un modèle équivalent mais d'un autre fournisseur.

Par ailleurs, différents exemples d'obturateurs en ligne pouvant équiper un tel dispositif d'obturation ont notamment été décrits par le demandeur dans le document EP3144569. De tels exemples d'obturateurs en ligne comportent donc tous des moyens de serrage pour serrer ou libérer une plaque mobile d'obturation et permettre alors de déplacer cette plaque mobile par rapport à la canalisation.

Avantageusement, le système d'inter-verrouillage peut comporter des moyens de solidarisation réversible permettant de solidariser entre elles les au moins trois pièces.

En d'autres termes, une fois les trois pièces du système d'interverrouillage assemblées entre elles grâce aux moyens de solidarisation réversible, il est possible de les désolidariser ultérieurement si nécessaire pour par exemple remplacer l'une des pièces ou encore pour modifier son positionnement par rapport à l'une au moins des deux autres pièces.

De tels moyens de solidarisation réversible peuvent notamment se présenter sous la forme de vis, d'écrous, de goupilles, d'anneaux élastiques ou d'éléments de solidarisation à encliquetage par exemple ou tout dispositif de fixation équivalent.

En pratique, le système d'inter-verrouillage peut comporter des moyens de réglage longitudinal permettant de modifier des positions relatives entre les au moins trois pièces suivant la direction OX.

Ainsi, les moyens de réglage longitudinal permettent de guider longitudinalement les pièces du système d'inter-verrouillage l'une par rapport à l'autre rectilignement suivant la direction OX. Une fois les positions relatives choisies, les moyens de solidarisation réversible peuvent alors être par exemple serrés pour immobiliser les pièces les unes par rapport aux autres.

Par conséquent, lorsque par exemple une vanne amont ou une vanne aval est remplacée par une autre vanne présentant des caractéristiques dimensionnelles différentes suivant la direction OX, alors les moyens de réglage longitudinal permettent de modifier le positionnement de la pièce du système d'interverrouillage agencée en regard de la vanne remplacée par rapport à l'une au moins des deux autres pièces.

Selon un exemple avantageux de l'invention, les moyens de réglage longitudinal peuvent comporter des trous de forme oblongue ménagés dans l'une au moins des au moins trois pièces.

En effet, au moins deux trous de forme oblongue peuvent alors coopérer avec des vis formant les moyens de solidarisation réversible et assurer un guidage en translation suivant la direction OX. La direction des trous de forme oblongue est donc agencée parallèlement à la direction OX pour assurer un tel réglage longitudinal entre les trois pièces du système d'inter-verrouillage.

Avantageusement, la première portion peut comporter une première découpe au moins partiellement circulaire permettant un mouvement de rotation d'un premier arbre solidaire en rotation de l'organe de commande amont, le premier arbre comportant une première came partiellement circulaire, la première came comportant une première paroi cylindrique coopérant avec la première découpe au moins partiellement circulaire.

En effet, lorsque la vanne amont comporte un organe de commande amont mobile en rotation par rapport à un corps de la vanne amont, une telle première découpe au moins partiellement circulaire permet alors la libre rotation de la première paroi cylindrique de la première came.

Dans ce cas, la quatrième portion peut comporter au moins une première arête rectiligne configurée pour empêcher un mouvement de rotation du premier arbre solidaire en rotation de l'organe de commande amont, la première came comportant un premier plan coopérant avec la première arête rectiligne.

La vanne amont comportant un organe de commande mobile en rotation par rapport à un corps de la vanne amont, une telle première arête rectiligne bloque alors la rotation de la première paroi cylindrique de la première came en venant au contact du premier plan.

En pratique, la deuxième portion peut comporter une deuxième découpe au moins partiellement circulaire permettant un mouvement de rotation d'un deuxième arbre solidaire en rotation de l'organe de commande aval, le deuxième arbre comportant une deuxième came partiellement circulaire, la deuxième came comportant une deuxième paroi cylindrique coopérant avec la deuxième découpe au moins partiellement circulaire.

En effet, lorsque la vanne aval comporte un organe de commande aval mobile en rotation par rapport à un corps de la vanne aval, une telle deuxième découpe au moins partiellement circulaire permet alors la libre rotation de la deuxième paroi cylindrique de la deuxième came.

De plus, la cinquième portion peut comporter au moins une deuxième arête rectiligne configurée pour empêcher un mouvement de rotation du deuxième arbre solidaire en rotation de l'organe de commande aval, la deuxième came comportant un deuxième plan coopérant avec la deuxième arête rectiligne.

Ainsi, la vanne aval comportant un organe de commande mobile en rotation par rapport à un corps de la vanne aval, une telle deuxième arête rectiligne bloque alors la rotation de la deuxième paroi cylindrique de la deuxième came en venant au contact du deuxième plan.

Selon un exemple avantageux de l'invention, la troisième portion peut comporter au moins une troisième arête rectiligne configurée pour empêcher un mouvement de rotation d'un troisième arbre solidaire en rotation de l'organe de commande de serrage, le troisième arbre comportant une troisième came partiellement circulaire, la troisième came comportant un troisième plan coopérant avec la troisième arête rectiligne.

Par analogie, lorsque l'obturateur en ligne comporte un organe de commande de serrage mobile en rotation par rapport à un corps de l'obturateur en ligne, une telle troisième arête rectiligne bloque alors la rotation de la troisième came.

Par ailleurs, la sixième portion peut comporter une troisième découpe au moins partiellement circulaire permettant un mouvement de rotation du troisième arbre solidaire en rotation de l'organe de commande de serrage, la troisième came comportant une troisième paroi cylindrique coopérant avec la troisième découpe au moins partiellement circulaire.

En effet, lorsque l'obturateur en ligne comporte un organe de commande de serrage mobile en rotation par rapport à un corps de l'obturateur en ligne, une telle troisième découpe au moins partiellement circulaire permet alors la libre rotation de la troisième paroi cylindrique de la troisième came.

L'invention et ses avantages apparaîtront avec plus de détails dans le cadre de la description qui suit avec des exemples donnés à titre illustratif en référence aux figures annexées qui représentent :
[Fig 1] - la figure 1, une vue en perspective d'un dispositif d'obturation selon l'art antérieur,
[Fig 2] - la figure 2, une vue en perspective d'un dispositif d'obturation conforme à l'invention,
[Fig 3] - la figure 3, une vue en perspective éclatée d'un dispositif d'obturation conforme à l'invention, et
[Fig 4] - la figure 4, une vue en perspective éclatée d'un système d'inter-verrouillage, conformément à l'invention.

Les éléments présents dans plusieurs figures distinctes peuvent être affectés d'une seule et même référence.

Comme déjà indiqué, l'invention se rapporte au domaine technique des dispositifs d'obturation d'une canalisation.

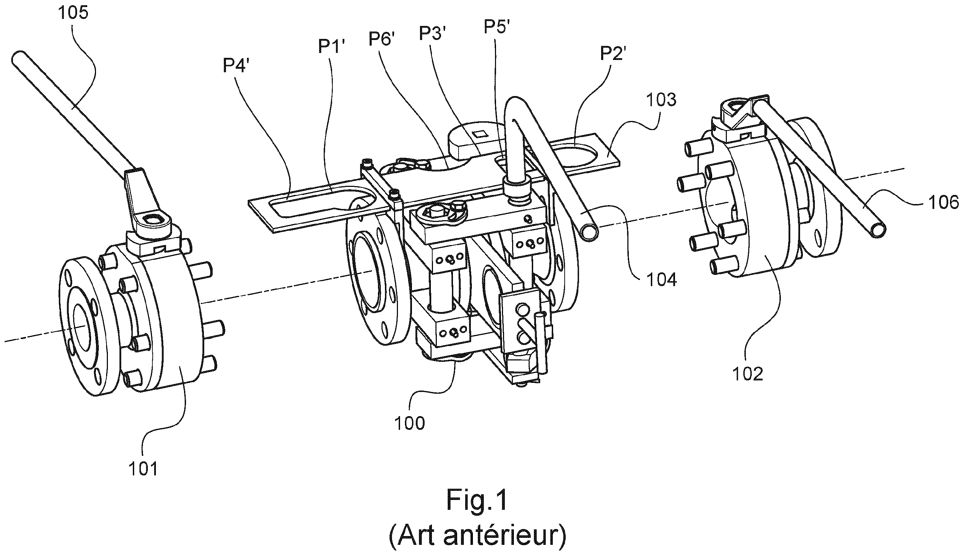

Selon l'art antérieur, et tel que représenté à la figure 1, de tels dispositifs d'obturation comportent un obturateur en ligne 100 permettant de réaliser une obturation étanche, et inversement, une ouverture d'une canalisation. Un tel obturateur en ligne 100 est par ailleurs agencé entre une vanne amont 101 et une vanne aval 102.

Une plaque d'inter-verrouillage 103 est en outre rapportée pour permettre d'inter-verrouiller entre eux un organe de serrage 104 avec un organe de commande amont 105 et un organe de commande aval 106.

La vanne amont 101 peut en effet être actionnée manuellement par un opérateur au moyen de l'organe de commande amont 105 tandis que la vanne aval 102 peut quant à elle être actionnée manuellement par un opérateur au moyen de l'organe de commande aval 106.

En outre, la plaque d'inter-verrouillage 103 est mobile entre deux positions extrémales.

Dans une première position extrémale de la plaque d'interverrouillage 103, une première portion p1' permet l'actionnement manuel de l'organe de commande amont 105, une deuxième portion p2' permet l'actionnement manuel de l'organe de commande aval 106 et une troisième portion p3' interdit l'actionnement manuel de l'organe de commande de serrage 104.

En revanche, dans la seconde position extrémale de la plaque d'inter-verrouillage 103, une quatrième portion p4' interdit l'actionnement manuel de l'organe de commande amont 105, une cinquième portion p5' interdit l'actionnement manuel de l'organe de commande aval 106 et une sixième portion p6' permet l'actionnement manuel de l'organe de commande de serrage 104.

Cependant, de tels dispositifs d'obturation ne sont pas adaptés pour permettre le remplacement d'une vanne ou d'un obturateur en ligne défectueux. Il est soit nécessaire de remplacer la vanne ou l'obturateur en ligne défectueux par exactement le même modèle de vanne ou d'obturateur en ligne, soit de remplacer également la plaque d'inter-verrouillage pour l'adapter aux nouvelles dimensions de la vanne ou de l'obturateur en ligne remplacé.

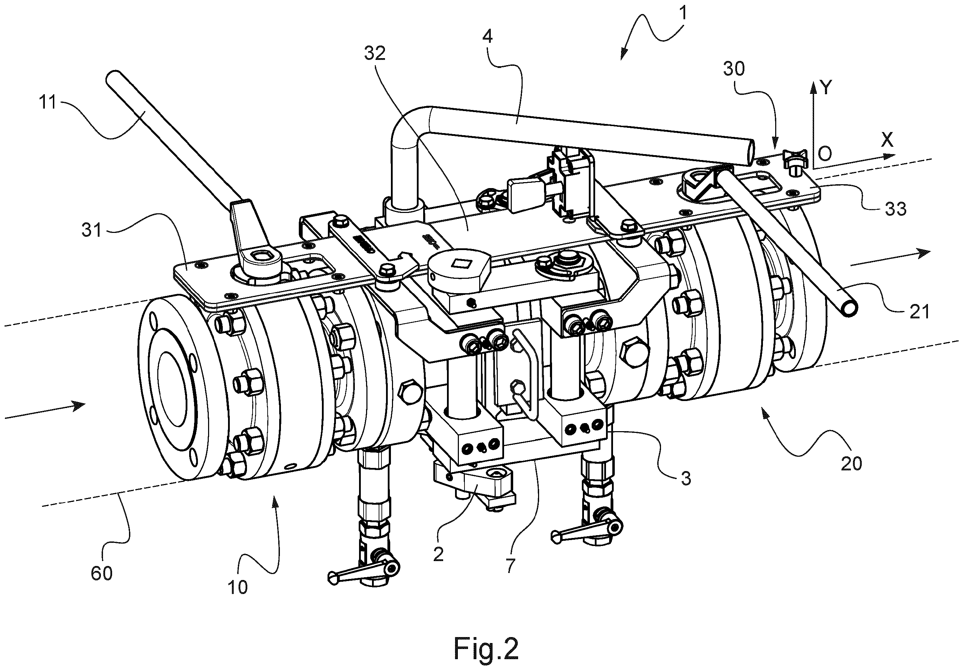

Tel que représenté à la figure 2, le dispositif d'obturation 1 d'une canalisation 60 comporte donc un obturateur en ligne 3 permettant de réaliser une obturation étanche, et inversement, une ouverture de la canalisation 60. En outre, un tel obturateur en ligne 3 comporte une plaque 7 et des moyens de serrage 2 permettant de serrer, et inversement, de libérer la plaque 7 pour permettre un déplacement relatif de la plaque 7 par rapport à la canalisation 60.

Une telle plaque 7 comporte une portion vide permettant la circulation du fluide et une portion pleine pour obturer la canalisation 60. Cette plaque 7 est alors mobile par rapport à la canalisation entre deux positions extrémales et peut être déplacée sous la dépendance du positionnement d'un organe de commande de serrage 4.

Au surplus, le dispositif d'obturation 1 comporte également une vanne amont 10 agencée en amont de l'obturateur en ligne 3 et une vanne aval 20 agencée en aval de l'obturateur en ligne 3.

La vanne amont 10 peut être actionnée entre une position ouverte autorisant la circulation fluidique et une position fermée empêchant la circulation fluidique. Cette vanne amont 10 est quant à elle actionnée manuellement par un opérateur au moyen d'un organe de commande amont 11.

De même, la vanne aval 20 peut être actionnée entre une position ouverte autorisant la circulation fluidique et une position fermée empêchant la circulation fluidique. Une telle vanne aval 20 est alors actionnée manuellement par un opérateur au moyen d'un organe de commande aval 21.

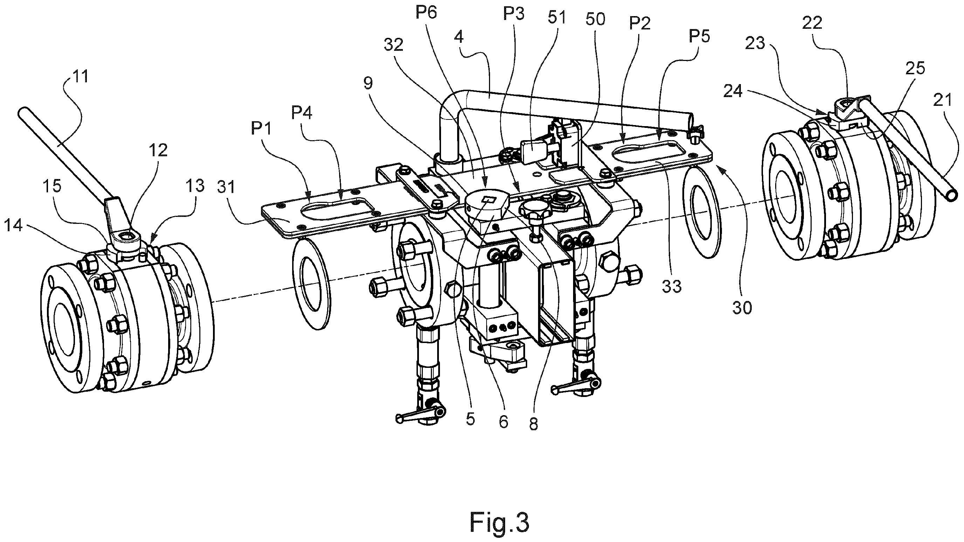

Selon l'invention, un tel dispositif d'obturation 1 comporte un système d'inter-verrouillage 30 pour inter-verrouiller l'organe de commande de serrage 4 avec l'organe de commande amont 11 et l'organe de commande aval 21. Un tel système d'inter-verrouillage 30 est en outre mobile en translation selon une direction OX entre une première position extrémale et une seconde position extrémale
Tel que représenté à la figure 3, un tel système d'inter-verrouillage 30 comporte alors différentes portions p1-p6.

Ainsi, dans la première position extrémale du système d'interverrouillage 30, une première portion p1 permet l'actionnement manuel de l'organe de commande amont 11, une deuxième portion p2 permet l'actionnement manuel de l'organe de commande aval 21 et une troisième portion p3 interdit l'actionnement manuel de l'organe de commande de serrage 4.

En revanche, dans la seconde position extrémale, une quatrième portion p4 interdit l'actionnement manuel de l'organe de commande amont 11, une cinquième portion p5 interdit l'actionnement manuel de l'organe de commande aval 21 et une sixième portion p6 permet l'actionnement manuel de l'organe de commande de serrage 4.

Par ailleurs, le système d'inter-verrouillage 30 comporte au moins trois pièces distinctes 31, 32, 33 assemblées entre elles, les trois pièces 31, 32, 33 comprenant une première pièce 31 comportant la première portion p1 et la quatrième portion p4, une deuxième pièce 32 comportant la troisième portion p3 et la sixième portion p6 et une troisième pièce 33 comportant la deuxième portion p2 et la cinquième portion p5.

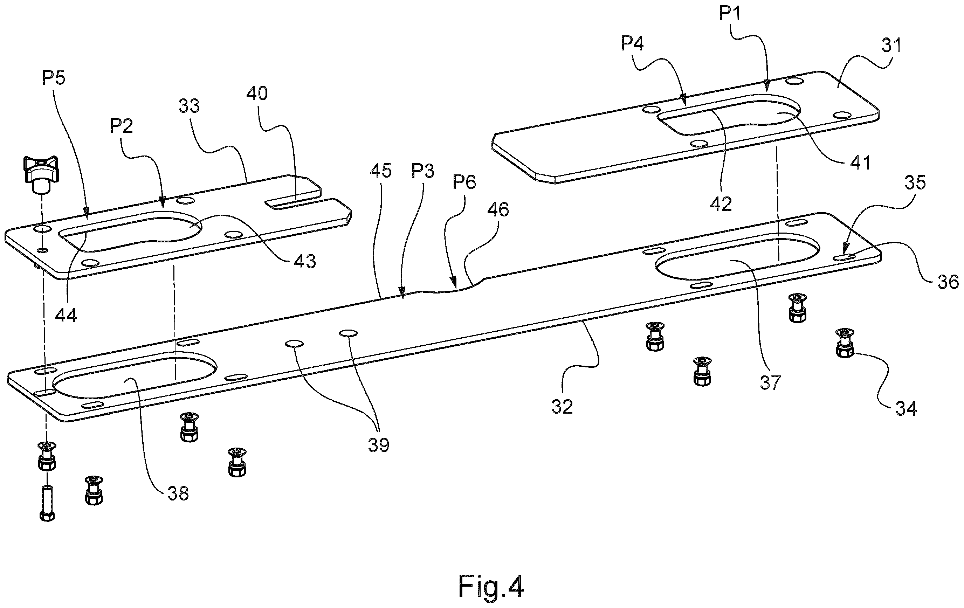

Tel que représenté à la figure 4, la première portion p1 peut comporter une première découpe au moins partiellement circulaire 41 permettant un mouvement de rotation d'un premier arbre 12 solidaire en rotation de l'organe de commande amont 11. De plus, le premier arbre 12 peut comporter une première came 13 partiellement circulaire, cette première came 13 comporte alors une première paroi cylindrique 14 coopérant avec la première découpe au moins partiellement circulaire 41.

Par ailleurs, la quatrième portion p4 peut quant à elle comporter au moins une première arête rectiligne 42 configurée pour empêcher un mouvement de rotation du premier arbre 12 solidaire en rotation de l'organe de commande amont 11. Ainsi, la première came 13 peut comporter un premier plan 15 coopérant avec la première arête rectiligne 42.

Par analogie, la deuxième portion p2 peut quant à elle comporter une deuxième découpe au moins partiellement circulaire 43 permettant un mouvement de rotation d'un deuxième arbre 22 solidaire en rotation de l'organe de commande aval 21. Ce deuxième arbre 22 peut alors comporter une deuxième came 23 partiellement circulaire, cette deuxième came 23 comportant une deuxième paroi cylindrique 24 coopérant avec la deuxième découpe au moins partiellement circulaire 43.

De même, la cinquième portion p5 peut comporter au moins une deuxième arête rectiligne 44 configurée pour empêcher un mouvement de rotation du deuxième arbre 22 solidaire en rotation de l'organe de commande aval 21. Cette deuxième came 23 peut alors comporter un deuxième plan 25 coopérant avec la deuxième arête rectiligne 44.

En outre, la troisième portion p3 peut quant à elle comporter au moins une troisième arête rectiligne 45 configurée pour empêcher un mouvement de rotation d'un troisième arbre 5 solidaire en rotation de l'organe de commande de serrage 4. Ce troisième arbre 5 peut ainsi comporter une troisième came 6 partiellement circulaire, cette troisième came 6 comportant un troisième plan 8 coopérant avec la troisième arête rectiligne 45.

Enfin, la sixième portion p6 peut comporter une troisième découpe au moins partiellement circulaire 46 permettant un mouvement de rotation du troisième arbre 5 solidaire en rotation de l'organe de commande de serrage 4. Ainsi, cette troisième came 6 peut comporter une troisième paroi cylindrique 9 coopérant avec ladite troisième découpe au moins partiellement circulaire 46.

Au surplus, le système d'inter-verrouillage 30 peut comporter des moyens de solidarisation réversible 34 permettant de solidariser entre elles les trois pièces 31, 32, 33.

Ces moyens de solidarisation réversible 34 sont représentés sous la forme de boulons comportant des vis coopérant respectivement chacune avec un écrou.

De plus, le système d'inter-verrouillage 30 peut également comporter des moyens de réglage longitudinal 35 permettant de modifier des positions relatives entre les trois pièces 31, 32, 33 suivant la direction OX.

En outre, de tels moyens de réglage longitudinal 35 peuvent par exemple être formés par au moins deux trous 36 de forme oblongue s'étendant suivant une direction parallèle à la direction OX. Tels que représentés, huit trous 36 sont ménagés dans la deuxième pièce 32 du système d'inter-verrouillage 30 et permettent alors à la première pièce 31 et à la troisième pièce 33 de se déplacer en translation par rapport à la deuxième pièce 32.

De plus, un tel dispositif d'obturation 1 peut également comporter un doigt d'indexage 50 monté sur un corps de l'obturateur en ligne 3. Un tel doigt d'indexage 50 comporte alors une extrémité mobile entre une position déployée et une position rétractée. Cette extrémité est alors déplacée suivant un mouvement de translation selon une direction OY perpendiculaire à la direction OX. Le déplacement en translation de l'extrémité du doigt d'indexage 50 peut en outre être réalisé sous la dépendance d'une clé 51 manoeuvrée manuellement par un opérateur.

L'extrémité mobile du doigt d'indexage 50 est alors configurée pour coopérer avec deux trous complémentaires 39 par exemple ménagés dans la deuxième pièce 32 du système d'interverrouillage 30 pour indexer en position le système d'interverrouillage 30 par rapport au corps de l'obturateur en ligne 3.

Par ailleurs, une fente 40 peut être réalisée dans la troisième pièce 33 pour permettre le libre passage de l'extrémité mobile du doigt d'indexage 50.

En outre, deux trous 37 et 38 peuvent également être ménagés dans la deuxième pièce 32 du système d'inter-verrouillage 30 pour permettre le libre passage de la première came 13 et de la deuxième came 23 lors du déplacement du système d'interverrouillage 30 suivant la direction OX.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'obturation (1) d'une canalisation (60), ladite canalisation (60) permettant une circulation fluidique d'au moins un fluide, ledit dispositif d'obturation (1) comportant :
• un obturateur en ligne (3) permettant de réaliser une obturation étanche, et inversement, une ouverture de ladite canalisation (60), ledit obturateur en ligne (3) comportant une plaque (7) et des moyens de serrage (2) permettant de serrer, et inversement, de libérer ladite plaque (7) pour permettre un déplacement relatif de ladite plaque (7) par rapport à ladite canalisation (60), ladite plaque (7) pouvant être déplacée sous la dépendance du positionnement d'un organe de commande de serrage (4),
• une vanne amont (10) agencée en amont dudit obturateur en ligne (3), ladite vanne amont (10) pouvant être actionnée entre une position ouverte autorisant ladite circulation fluidique et une position fermée empêchant ladite circulation fluidique, ladite vanne amont (10) étant actionnée manuellement par un opérateur au moyen d'un organe de commande amont (11),
• une vanne aval (20) agencée en aval dudit obturateur en ligne (3), ladite vanne aval (20) pouvant être actionnée entre une position ouverte autorisant ladite circulation fluidique et une position fermée empêchant ladite circulation fluidique, ladite vanne aval (20) étant actionnée manuellement par un opérateur au moyen d'un organe de commande aval (21),
ledit dispositif d'obturation (1) comportant un système d'inter-verrouillage (30) pour inter-verrouiller ledit organe de commande de serrage (4) avec ledit organe de commande amont (11) et ledit organe de commande aval (21), ledit système d'inter-verrouillage (30) étant mobile en translation selon une direction OX entre une première position extrémale et une seconde position extrémale, ledit système d'inter-verrouillage (30) comportant différentes portions (p1-p6) telles que :
∘ dans ladite première position extrémale, une première portion (p1) permet l'actionnement manuel dudit organe de commande amont (11), une deuxième portion (p2) permet l'actionnement manuel dudit organe de commande aval (21) et une troisième portion (p3) interdit l'actionnement manuel dudit organe de commande de serrage (4),
∘ dans ladite seconde position extrémale, une quatrième portion (p4) interdit l'actionnement manuel dudit organe de commande amont (11), une cinquième portion (p5) interdit l'actionnement manuel dudit organe de commande aval (21) et une sixième portion (p6) permet l'actionnement manuel dudit organe de commande de serrage (4),
**caractérisé en ce que** ledit système d'inter-verrouillage (30) comporte au moins trois pièces distinctes (31, 32, 33) assemblées entre elles, lesdites au moins trois pièces (31, 32, 33) comprenant une première pièce (31) comportant ladite première portion (p1) et ladite quatrième portion (p4), une deuxième pièce (32) comportant ladite troisième portion (p3) et ladite sixième portion (p6) et une troisième pièce (33) comportant ladite deuxième portion (p2) et ladite cinquième portion (p5).

2. Dispositif d'obturation selon la revendication 1, **caractérisé en ce que** ledit système d'inter-verrouillage (30) comporte des moyens de solidarisation réversible (34) permettant de solidariser entre elles lesdites au moins trois pièces (31, 32, 33).

3. Dispositif d'obturation selon l'une quelconque des revendications 1 à 2, **caractérisé en ce que** ledit système d'interverrouillage (30) comporte des moyens de réglage longitudinal (35) permettant de modifier des positions relatives entre lesdites au moins trois pièces (31, 32, 33) suivant ladite direction OX.

4. Dispositif d'obturation selon la revendication 3, **caractérisé en ce que** lesdits moyens de réglage longitudinal (35) comportent des trous (36) de forme oblongue ménagés dans l'une au moins desdites au moins trois pièces (31, 32, 33).

5. Dispositif d'obturation selon l'une quelconque des revendications 1 à 4, **caractérisé en ce que** ladite première portion (p1) comporte une première découpe au moins partiellement circulaire (41) permettant un mouvement de rotation d'un premier arbre (12) solidaire en rotation dudit organe de commande amont (11), ledit premier arbre (12) comportant une première came (13) partiellement circulaire, ladite première came (13) comportant une première paroi cylindrique (14) coopérant avec ladite première découpe au moins partiellement circulaire (41).

6. Dispositif d'obturation selon la revendication 5, **caractérisé en ce que** ladite quatrième portion (p4) comporte au moins une première arête rectiligne (42) configurée pour empêcher un mouvement de rotation dudit premier arbre (12) solidaire en rotation dudit organe de commande amont (11), ladite première came (13) comportant un premier plan (15) coopérant avec ladite première arête rectiligne (42).

7. Dispositif d'obturation selon l'une quelconque des revendications 1 à 6, **caractérisé en ce que** ladite deuxième portion (p2) comporte une deuxième découpe au moins partiellement circulaire (43) permettant un mouvement de rotation d'un deuxième arbre (22) solidaire en rotation dudit organe de commande aval (21), ledit deuxième arbre (22) comportant une deuxième came (23) partiellement circulaire, ladite deuxième came (23) comportant une deuxième paroi cylindrique (24) coopérant avec ladite deuxième découpe au moins partiellement circulaire (43).

8. Dispositif d'obturation selon la revendication 7, **caractérisé en ce que** ladite cinquième portion (p5) comporte au moins une deuxième arête rectiligne (44) configurée pour empêcher un mouvement de rotation dudit deuxième arbre (22) solidaire en rotation dudit organe de commande aval (21), ladite deuxième came (23) comportant un deuxième plan (25) coopérant avec ladite deuxième arête rectiligne (44).

9. Dispositif d'obturation selon l'une quelconque des revendications 1 à 8, **caractérisé en ce que** ladite troisième portion (p3) comporte au moins une troisième arête rectiligne (45) configurée pour empêcher un mouvement de rotation d'un troisième arbre (5) solidaire en rotation dudit organe de commande de serrage (4), ledit troisième arbre (5) comportant une troisième came (6) partiellement circulaire, ladite troisième came (6) comportant un troisième plan (8) coopérant avec ladite troisième arête rectiligne (45).

10. Dispositif d'obturation selon la revendication 9, **caractérisé en ce que** ladite sixième portion (p6) comporte une troisième découpe au moins partiellement circulaire (46) permettant un mouvement de rotation dudit troisième arbre (5) solidaire en rotation dudit organe de commande de serrage (4), ladite troisième came (6) comportant une troisième paroi cylindrique (9) coopérant avec ladite troisième découpe au moins partiellement circulaire (46).

## Patentansprüche

1. Verschlussvorrichtung zum Verschließen (1) einer Rohrleitung (60), wobei die Rohrleitung (60) eine Fluidzirkulation von mindestens einem Fluid ermöglicht, wobei die Verschlussvorrichtung (1) umfasst:
○ einen Inline-Verschluss (3), der es ermöglicht, eine dichte Schließung beziehungsweise eine Öffnung der Leitung (60) zu bewirken, wobei der Inline-Verschluss (3) eine Platte (7) und Spannmittel (2) umfasst, die es ermöglichen, die Platte (7) zu spannen beziehungsweise freizugeben, um eine Bewegung der Platte (7) relativ zu der Leitung (60) zu ermöglichen, wobei die Platte (7) in Abhängigkeit von der Positionierung eines Spannsteuerorgans (4) bewegbar ist,
○ ein stromaufwärtiges Ventil (10), das stromaufwärts des Inline-Verschlusses (3) angeordnet ist, wobei das stromaufwärtige Ventil (10) zwischen einer offenen Position, die die Fluidzirkulation zulässt, und einer geschlossenen Position, die die Fluidzirkulation verhindert, betätigbar ist, wobei das stromaufwärtige Ventil (10) von einem Bediener mittels eines stromaufwärtigen Steuerorgans (11) manuell betätigt wird,
○ ein stromabwärtiges Ventil (20), das stromabwärts des Inline-Verschlusses (3) angeordnet ist, wobei das stromabwärtige Ventil (20) zwischen einer offenen Position, die die Fluidzirkulation zulässt, und einer geschlossenen Position, die die Fluidzirkulation verhindert, betätigbar ist, wobei das stromabwärtige Ventil (20) von einer Bedienungsperson mittels eines stromabwärtigen Steuerorgans (21) manuell betätigt wird,
wobei die Verschlussvorrichtung (1) ein Koppelverriegelungssystem (30) umfasst, um das Spannsteuerorgan (4) mit dem stromaufwärtigen Steuerorgan (11) und dem stromabwärtigen Steuerorgan (21) gekoppelt zu verriegeln, wobei das Koppelverriegelungssystem (30) in einer Richtung OX zwischen einer ersten Endposition und einer zweiten Endposition translatorisch beweglich ist, wobei das Koppelverriegelungssystem (30) verschiedene Abschnitte (p1-p6) umfasst, so dass:
○ in der ersten Endposition ein erster Abschnitt (p1) die manuelle Betätigung des stromaufwärtigen Steuerorgans (11) ermöglicht, ein zweiter Abschnitt (p2) die manuelle Betätigung des stromabwärtigen Steuerorgans (21) ermöglicht und ein dritter Abschnitt (p3) die manuelle Betätigung des Spannsteuerorgans (4) unterbindet,
○ in der zweiten Endposition ein vierter Abschnitt (p4) die manuelle Betätigung des stromaufwärtigen Steuerorgans (11) unterbindet, ein fünfter Abschnitt (p5) die manuelle Betätigung des stromabwärtigen Steuerorgans (21) unterbindet und ein sechster Abschnitt (p6) die manuelle Betätigung des Spannsteuerorgans (4) zulässt,
**dadurch gekennzeichnet, dass** das Verriegelungssystem (30) mindestens drei verschiedene aneinander gefügte Teile (31, 32, 33) umfasst, wobei die mindestens drei Teile (31, 32, 33) ein erstes Teil (31) mit dem ersten Abschnitt (p1) und dem vierten Abschnitt (p4), ein zweites Teil (32) mit dem dritten Abschnitt (p3) und dem sechsten Abschnitt (p6) und ein drittes Teil (33) mit dem zweiten Abschnitt (p2) und dem fünften Abschnitt (P5) umfassen.

2. Verschlussvorrichtung nach Anspruch 1, **dadurch gekennzeichnet, dass** das Koppelverriegelungssystem (30) Mittel zum reversiblen Verbinden (34) umfasst, die es ermöglichen, die mindestens drei Teile (31, 32, 33) fest miteinander zu verbinden.

3. Verschlussvorrichtung nach einem der Ansprüche 1 bis 2, **dadurch gekennzeichnet, dass** das Koppelverriegelungssystem (30) Mittel zum Einstellen in Längsrichtung (35) umfasst, die es ermöglichen, die relativen Positionen zwischen den mindestens drei Teilen (31, 32, 33) in der Richtung OX zu verändern.

4. Verschlussvorrichtung nach Anspruch 3, **dadurch gekennzeichnet, dass** die Mittel zum Einstellen in Längsrichtung (35) Löcher (36) von länglicher Form umfassen, die in mindestens einem der mindestens drei Teile (31, 32, 33) ausgebildet sind.

5. Verschlussvorrichtung nach einem der Ansprüche 1 bis 4, **dadurch gekennzeichnet, dass** der erste Abschnitt (p 1) einen ersten, zumindest teilweise kreisförmigen Ausschnitt (41) aufweist, der eine Drehbewegung einer drehfest mit dem stromaufwärtigen Steuerorgan (11) verbundenen ersten Welle (12) ermöglicht, wobei die erste Welle (12) einen ersten, teilkreisförmigen Nocken (13) aufweist, wobei der erste Nocken (13) eine erste zylindrische Wand (14) aufweist, die mit dem ersten, zumindest teilweise kreisförmigen Ausschnitt (41) zusammenwirkt.

6. Verschlussvorrichtung nach Anspruch 5, **dadurch gekennzeichnet, dass** der vierte Abschnitt (p4) mindestens eine erste geradlinige Kante (42) umfasst, die konfiguriert ist, um eine Drehbewegung der drehfest mit dem stromaufwärtigen Steuerorgan (11) verbundenen ersten Welle (12) zu verhindern, wobei der erste Nocken (13) eine erste Ebene (15) umfasst, die mit der ersten geradlinigen Kante (42) zusammenwirkt.

7. Verschlussvorrichtung nach einem der Ansprüche 1 bis 6, **dadurch gekennzeichnet, dass** der zweite Abschnitt (p2) einen zweiten, zumindest teilweise kreisförmigen Ausschnitt (43) aufweist, der eine Drehbewegung einer drehfest mit dem stromabwärtigen Steuerorgan (21) verbundenen zweiten Welle (22) ermöglicht, wobei die zweite Welle (22) einen zweiten teilkreisförmigen Nocken (23) aufweist, wobei der zweite Nocken (23) eine zweite zylindrische Wand (24) aufweist, die mit dem zweiten zumindest teilweise kreisförmigen Ausschnitt (43) zusammenwirkt.

8. Verschlussvorrichtung nach Anspruch 7, **dadurch gekennzeichnet, dass** der fünfte Abschnitt (p5) mindestens eine zweite geradlinige Kante (44) umfasst, die konfiguriert ist, um eine Drehbewegung der drehfest mit dem stromabwärtigen Steuerorgan (21) verbundenen zweiten Welle (22) zu verhindern, wobei der zweite Nocken (23) eine zweite Ebene (25) umfasst, die mit der zweiten geradlinigen Kante (44) zusammenwirkt.

9. Verschlussvorrichtung nach einem der Ansprüche 1 bis 8, **dadurch gekennzeichnet, dass** der dritte Abschnitt (p3) mindestens eine dritte geradlinige Kante (45) aufweist, die konfiguriert ist, um eine Drehbewegung einer drehfest mit dem Spannsteuerorgan (4) verbundenen dritten Welle (5) zu verhindern, wobei die dritte Welle (5) einen teilkreisförmigen dritten Nocken (6) aufweist, wobei der dritte Nocken (6) eine dritte Ebene (8) umfasst, die mit der dritten geradlinigen Kante (45) zusammenwirkt.

10. Verschlussvorrichtung nach Anspruch 9, **dadurch gekennzeichnet, dass** der sechste Abschnitt (p6) einen dritten, zumindest teilweise kreisförmigen Ausschnitt (46) umfasst, der eine Drehbewegung der dritten Welle (5) ermöglicht, die drehfest mit dem Spannsteuerorgan (4) verbunden ist, wobei der dritte Nocken (6) eine dritte zylindrische Wand (9) umfasst, die mit dem dritten, zumindest teilweise kreisförmigen Ausschnitt (46) zusammenwirkt.

## Claims

1. Device (1) for shutting off a pipe (60), said pipe (60) allowing fluidic circulation of at least one fluid, said shut-off device (1) comprising:
• an in-line shut-off means (3) for shutting off said pipe in a sealed manner and, conversely, for opening said pipe (60), said in-line shut-off means (3) comprising a plate (7) and tightening means (2) allowing said plate (7) to be tightened and, conversely, released, in order to allow said plate (7) to be moved relative to said pipe (60), said plate (7) being able to be moved depending on the positioning of a tightening control member (4);
• an upstream valve (10) arranged upstream of said in-line shut-off means (3), said upstream valve (10) being able to be actuated between an open position allowing said fluidic circulation and a closed position preventing said fluidic circulation, said upstream valve (10) being actuated manually by an operator by means of an upstream control member (11),
• a downstream valve (20) arranged downstream of said in-line shut-off means (3), said downstream valve (20) being able to be actuated between an open position allowing the fluidic circulation and a closed position preventing the fluidic circulation, said downstream valve (20) being actuated manually by an operator by means of a downstream control member (21),
said shut-off device (1) comprising an interlocking system (30) for interlocking said tightening control member (4) with said upstream control member (11) and said downstream control member (21), said interlocking system (30) being movable in translation in a direction OX between a first end position and a second end position, said interlocking system (30) comprising different portions (p1-p6) such that:
∘ in said first end position, a first portion (p1) allows the manual actuation of said upstream control member (11), a second portion (p2) allows the manual actuation of said downstream control member (21) and a third portion (p3) prevents the manual actuation of said tightening control member (4);
∘ in said second end position, a fourth portion (p4) prevents the manual actuation of said upstream control member (11), a fifth portion (p5) prevents the manual actuation of said downstream control member (21) and a sixth portion (p6) allows the manual actuation of said tightening control member (4),
**characterised in that** said interlocking system (30) comprises at least three separate parts (31, 32, 33) assembled together, said at least three parts (31, 32, 33) comprising a first part (31) comprising said first portion (p1) and said fourth portion (p4), a second part (32) comprising said third portion (p3) and said sixth portion (p6), and a third part (33) comprising said second portion (p2) and said fifth portion (p5).

2. Shut-off device according to claim 1, **characterised in that** said interlocking system (30) comprises reversible securing means (34) allowing said at least three parts (31, 32, 33) to be secured together.

3. Shut-off device according to any one of claims 1 to 2, **characterised in that** said interlocking system (30) comprises longitudinal adjustment means (35) allowing relative positions of said at least three parts (31, 32, 33) to be modified in the direction OX.

4. Shut-off device according to claim 3, **characterised in that** said longitudinal adjustment means (35) comprise oblong holes (36) provided in at least one of said at least three parts (31, 32, 33).

5. Shut-off device according to any one of claims 1 to 4, **characterised in that** said first portion (p1) comprises a first at least partially circular cutout (41) allowing a rotational movement of a first shaft (12) integral in rotation with said upstream control member (11), said first shaft (12) comprising a first partially circular cam (13), said first cam (13) comprising a first cylindrical wall (14) cooperating with said first at least partially circular cutout (41).

6. Shut-off device according to claim 5, **characterised in that** said fourth portion (p4) comprises at least one first straight edge (42) configured to prevent the rotational movement of said first shaft (12) integral in rotation with said upstream control member (11), said first cam (13) comprising a first plane (15) cooperating with said first straight edge (42).

7. Shut-off device according to any one of claims 1 to 6, **characterised in that** said second portion (p2) comprises a second at least partially circular cutout (43) allowing a rotational movement of a second shaft (22) integral in rotation with said downstream control member (21), said second shaft (22) comprising a second cam (23), said second cam (23) comprising a second cylindrical wall (24) cooperating with said second at least partially circular cutout (43).

8. Shut-off device according to claim 7, **characterised in that** said fifth portion (p5) comprises at least one second straight edge (44) configured to prevent the rotational movement of said second shaft (22) integral in rotation with said downstream control member (21), said second cam (23) comprising a second plane (25) cooperating with said second straight edge (44).

9. Shut-off device according to any one of claims 1 to 8, **characterised in that** said third portion (p3) comprises at least one third straight edge (45) configured to prevent the rotational movement of a third shaft (5) integral in rotation with said tightening control member (4), said third shaft (5) comprising a third partially circular cam (6), said third cam (6) comprising a third plane (8) cooperating with said third straight edge (45).

10. Shut-off device according to claim 9, **characterised in that** said sixth portion (p6) comprises a third at least partially circular cutout (46) allowing a rotational movement of said third shaft (5) integral in rotation with said tightening control member (4), said third cam (6) comprising a third cylindrical wall (9) cooperating with said third at least partially circular cutout (46).
